# EUROPEAN PATENT APPLICATION

(11) **EP 4 804 134 A1**
(43) Date of publication of application: **09.09.2026**
(21) Application number: 24885240.2
(22) Date of filing: 08.08.2024
(51) Int. Cl.: G06T 19/00, G06F 3/04815

(54) **OBJECT RENDERING METHOD AND PROGRAM**

(30) Priority: 30.10.2023 JP 2023186012
(71) Applicant: CELSYS, Inc., Tokyo 160-0023 (JP)
(72) Inventor: NAKAMURA Mamiho, Tokyo 160-0023 (JP)
(74) Representative: Hautier IP - MC/EP
(86) International application number: PCT/JP2024/028518
(87) International publication number: WO 2025/094463

(57) **Abstract**

[Object] To provide a technology that enables a computer to more easily rotate and render an object placed in a virtual three-dimensional space based on an instruction from an operator.

[Solution] The disclosed technology provides a rendering method for causing a computer to render, on a display screen, an image of an object placed in a virtual space, the image being captured by a virtual camera placed in the virtual space, including: forming a manipulator on the display screen, a shape of the manipulator on the display screen changing in accordance with a relative position and/or orientation of the virtual camera and the object, the manipulator receiving an instruction from an operator onto the display screen; setting a prescribed point defined on the display screen or a prescribed point present at a position at which a point defined in the virtual space is projected onto the display screen via the virtual camera; changing a position of the prescribed point such that the manipulator and the prescribed point do not come too close to each other on the display screen; rotating the object about an axis based on a rotational angle and a rotational direction of a vector directed from the prescribed point toward a position instructed on the display screen by the operator when the vector rotates along with a movement of the instructed position; and rendering an image of the object on the display screen, the image being captured by the virtual camera.

## Description

### [Technical Field]

The present invention relates to an object rendering method and a program.

### [Background Art]

There is a technology in which a computer generates, based on an instruction from an operator, a desired virtual three-dimensional space by setting an object placed in a virtual three-dimensional space, at an appropriate position and orientation.

Adjustment of the orientation of an object placed in a virtual three-dimensional space can be achieved by rotating the object in the virtual three-dimensional space. Rotation of an object can be achieved, for example, by setting a certain axis as a center and rotating the object about the axis. By using this technology, an object can be adjusted to have a desired orientation.

For example, there is a technology in which when an operation such as drag is conducted along a ring of a manipulator which is present about an axis selected from among a plurality of axes based on an operation instruction from a user, an object ("3D object material" in Non-Patent Literature 1) can be rotated about the axis in accordance with the instruction of the drag operation (see, for example, Non-Patent Literature 1).

In addition, similarly to the above, there is a technology in which a three-dimensional object can be rotated about an axis based on an instruction from an operator (see, for example, Non-Patent Literature 2).

However, in the prior art, there are certain limitations in the function of a user interface for receiving an instruction from an operator, and there has been a case where rotating an object into an orientation desired by an operator involves a difficulty.

For example, if the direction of the axis about which an object is rotated is approximately orthogonal to the line-of-sight direction of the virtual camera, there has been a case where it is difficult to appropriately reflect the operation of the operator in the rotation of an object, such as the object being rotated in a direction or angle which is not intended by the operator, due to a subtle movement of the drag operation of the operator.

### [Citation List]

### [Non-Patent Literature]

Non-Patent Literature 1: https://help.clip-studio.com/ja-jp/manual_jp/660_3d/3D%E7%B 4%A0%E6%9D%90%E3%82%92%E5%9B%9E%E8%BB%A2%E3%81%97%E3%81%A6% E8%A7%92%E5%BA%A6%E3%82%92%E5%A4%89%E6%9B%B4%E3%81%99%E3%82 %8B.htm
Non-Patent Literature 2:
   https://www.blender.org/
   https://docs.blender.org/manual/en/3.6/editors/3dview/displ ay/gizmo.html

### [Summary of Invention]

### [Technical Problem]

An object of the disclosed technology is to provide a technology that enables a computer to more easily rotate and render an object placed in a virtual three-dimensional space, based on an instruction from an operator.

### [Solution to Problem]

The disclosed technology provides a rendering method for causing a computer to render, on a display screen, an image of an object placed in a virtual space, the image being captured by a virtual camera placed in the virtual space, including:
forming a manipulator on the display screen, a shape of the manipulator on the display screen changing in accordance with a relative position and/or orientation of the virtual camera and the object, the manipulator receiving an instruction from an operator onto the display screen;
setting a prescribed point defined on the display screen or a prescribed point present at a position at which a point defined in the virtual space is projected onto the display screen via the virtual camera;
changing a position of the prescribed point such that the manipulator and the prescribed point do not come too close to each other on the display screen;
rotating the object about an axis based on a rotational angle and a rotational direction of a vector directed from the prescribed point toward a position instructed on the display screen by the operator when the vector rotates along with a movement of the instructed position; and
rendering an image of the rotated object on the display screen, the image being captured by the virtual camera.

### [Advantageous Effects of Invention]

The disclosed technology can provide a technology that enables a computer to more easily rotate and render an object placed in a virtual three-dimensional space, based on an instruction from an operator.

### [Brief Description of Drawings]

[FIG. 1] FIG. 1 is a diagram showing a situation in which to capture an image of an object present in a virtual three-dimensional space by using a virtual camera.
[FIG. 2] FIG. 2A to FIG. 2F are diagrams showing images, which are captured by a virtual camera 160 (not shown), of how an object 100 is rotated about an axis 140 in a virtual space based on an instruction from an operator operating a manipulator 150.
[FIG. 3] FIG. 3 is a diagram showing an image of the object 100 and the manipulator 150 which is captured by the virtual camera in a case where the axis 140 and the line-of-sight direction of the virtual camera are nearly at a right angle.
[FIG. 4] FIG. 4A to FIG. 4C are diagrams showing an example in which the object 100 is rotated in a direction intended by the operator in the case where the axis 140 and the line-of-sight direction of the virtual camera are nearly at a right angle.
[FIG. 5] FIG. 5A to FIG. 5C are diagrams showing an example in which the object 100 is rotated in a direction which is not intended by the operator in the case where the axis 140 and the line-of-sight direction of the virtual camera are nearly at a right angle.
[FIG. 6] FIG. 6A to FIG. 6C are diagrams showing an example in which a rotational direction of the object 100 is matched with the intention of the operator by changing a position of a prescribed point, and obtaining an instruction from the operator by using the changed prescribed point, even in the case where the axis 140 and the line-of-sight direction of the virtual camera are nearly at a right angle.
[FIG. 7] FIG. 7A to FIG. 7C are diagrams showing examples in which the manipulator 150 obtains a movement of a mouse pointer 120.
[FIG. 8] FIG. 8A to FIG. 8C are diagrams showing examples in which the manipulator 150 obtains a movement of the mouse pointer 120.
[FIG. 9] FIG. 9 shows a flowchart of processing of the embodiment.
[FIG. 10] FIG. 10A and FIG. 10B are flowcharts showing details of processing of the embodiment.
[FIG. 11] FIG. 11A and FIG. 11B are flowcharts showing details of processing of the embodiment.
[FIG. 12] FIG. 12 is a flowchart showing a detail of processing of the embodiment.
[FIG. 13] FIG. 13 is a hardware configuration diagram of the embodiment.
[FIG. 14] FIG. 14 is a diagram showing another example of the manipulator.

### [Description of Embodiments]

Embodiments will be described with reference to the drawings.

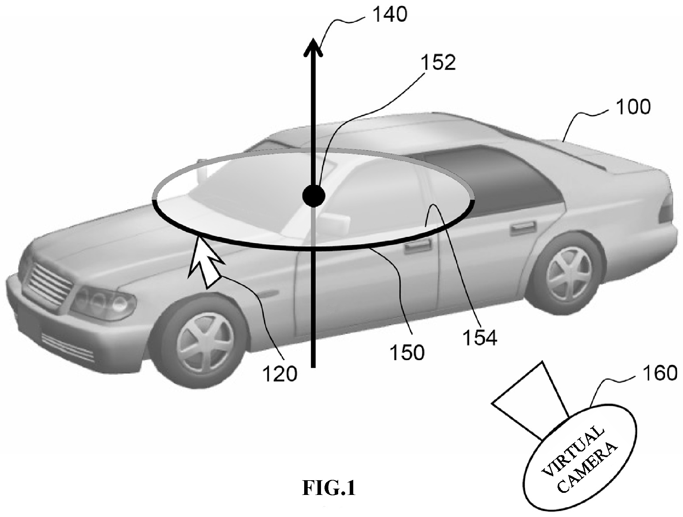

FIG. 1 is a diagram showing a situation in which to capture an image of an object present in a virtual three-dimensional space by using a virtual camera.

In FIG. 1, an object 100, which is an automobile, is a three-dimensional object placed in a virtual space. An axis 140 is a rotational axis set in the virtual space. A computer can rotate the object 100 about the axis 140 based on an instruction from an operator.

There may be a plurality of axes 140 and a plurality of manipulators 150. In this case, an axis 140 may be selected by the operator selecting and activating a manipulator 150. Alternatively, a desired axis 140 may be selected by clicking the axis 140 with a mouse or the like based on an instruction from the operator, or by selecting the axis 140 with the operator's finger on a display screen. The object 100 may be rotated about the selected axis 140 based on an instruction from the operator.

For example, a plurality of axes 140 may be arranged in such a manner as to be orthogonal to one another at a prescribed point 152. The object can be placed in a desired orientation in the virtual space by repeatedly rotating the object 100 about the selected axis 140 based on an instruction from the operator.

The manipulator 150 may be a contour having a circular shape in the virtual space, and can be present on a plane 154 which is orthogonal to the axis 140 at the prescribed point 152 on the axis 140. Note that the manipulator 150 does not have to have a circular shape in the three-dimensional space, and may have any of various shapes. In addition, the manipulator may be placed in the virtual space such that an image of the manipulator is captured by the virtual camera and displayed on the display screen. Alternatively, the manipulator may be directly rendered on the display screen without being present in the virtual space.

The manipulator 150 shown in FIG. 1 is an example of a user interface for receiving an instruction from the operator to rotate the object 100 about the axis 140, and is not limited to the mode of FIG. 1. For example, only part of the circle of the manipulator 150 may be displayed on the display screen.

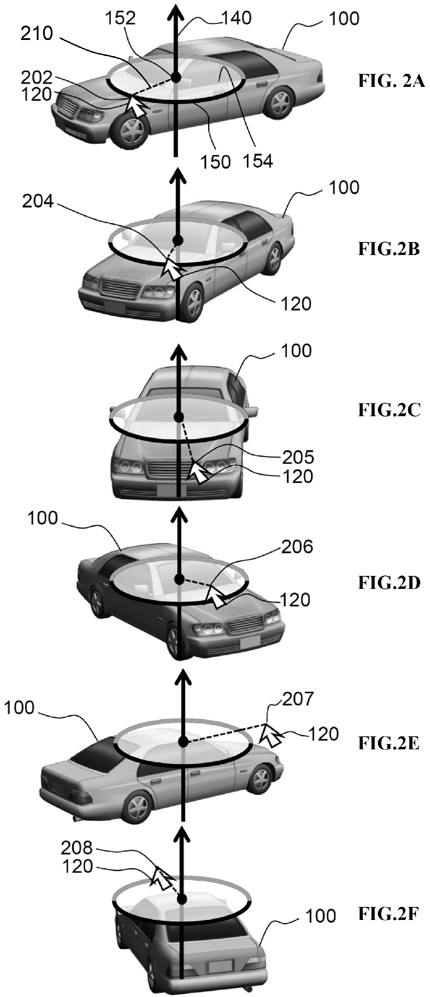

FIG. 2A to FIG. 2F are diagrams showing images, which are captured by the virtual camera 160 (not shown), of how the object 100 is rotated about the axis 140 in the virtual space based on an instruction from the operator operating the manipulator 150.

In FIG. 2A, a mouse button is pressed down in a state where a pointer 120 such as a mouse pointer is located at a point 202 on the manipulator 150. By this operation of the operator, an axis 140 for rotation may be selected. Note that a dotted line 210 is drawn from the prescribed point 152 to the point 202. This dotted line 210 may be rendered on the display screen by starting the mouse button pressing operation or drag operation of the operator. Alternatively, since the dotted line 210 is for visualizing the mouse button pressing operation (drag starting operation) of the operator in an easily understandable manner, the dotted line 210 does not have to be displayed.

FIG. 2B shows how the pointer 120 has been dragged to a point 204. By this drag operation of the mouse, the object 100 is rotated. An angle for rotation may be equal to an angle formed by the point 202, the prescribed point 152, and the point 204 on the screen, or an angle approximate to this angle. A rotational angle of the object 100 can be determined based on an angle formed by a starting point of the drag, the prescribed point 152, and the point 204 through which the drag passes, on the screen. Note that the operation of the operator is not limited to the drag operation. For example, an operation in which a starting point is designated by click, then a rotation is operated by moving the mouse, and the rotation is ended by click again may be employed.

In FIG. 2C, the drag operation has further proceeded, so that the pointer 120 is located at a point 205. The pointer 120 does not necessarily have to be present on the contour of the manipulator 150, and may be present at the point 205 outside the contour, or inside. By this drag operation, the object 100 is further rotated.

In FIG. 2D, the drag operation has further proceeded, so that the pointer 120 is present at a point 206 inside the manipulator 150. By this drag operation, the object 100 is further rotated.

In FIG. 2E, the pointer 120 is present at a point 207, and by this drag operation, the object 100 is further rotated.

In FIG. 2F, the pointer 120 is present at a point 208, and by this drag operation, the object 100 is further rotated.

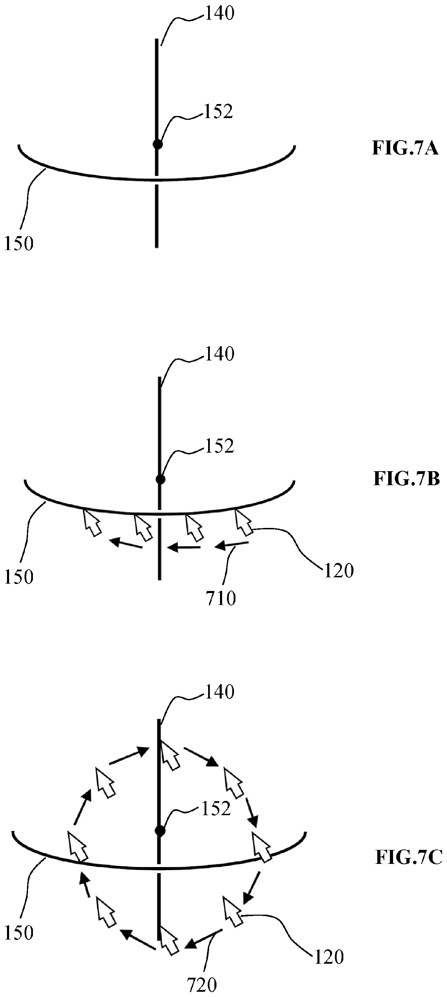

FIG. 7A to FIG. 7C are diagrams showing examples in which the manipulator 150 obtains a movement of the mouse pointer 120.

FIG. 7A shows one example of the manipulator. The rotational axis is inclined such that a lower side in the drawing is located deeper than an upper side in the drawing as viewed from the virtual camera. In the case of operating the manipulator, the operator mainly uses the following two operation methods.

In a first operation method, as shown in FIG. 7B, the operator moves the pointer in a direction of arrows 710 along a ring of the manipulator. To rotate the object clockwise as viewed from above, the pointer is moved from right to left as shown in the drawing. To rotate the object counterclockwise, the pointer is moved from left to right in the opposite manner to the drawing.

In a second operation method, as shown in FIG. 7C, the operator moves the pointer in a direction of arrows 720 in such a manner as to make a rotational motion approximately about the prescribed point 152. To rotate the object clockwise as viewed from above, the pointer is moved in a clockwise rotation as shown in the drawing. To rotate the object counterclockwise, the pointer is moved in a counterclockwise rotation in the opposite manner to the drawing.

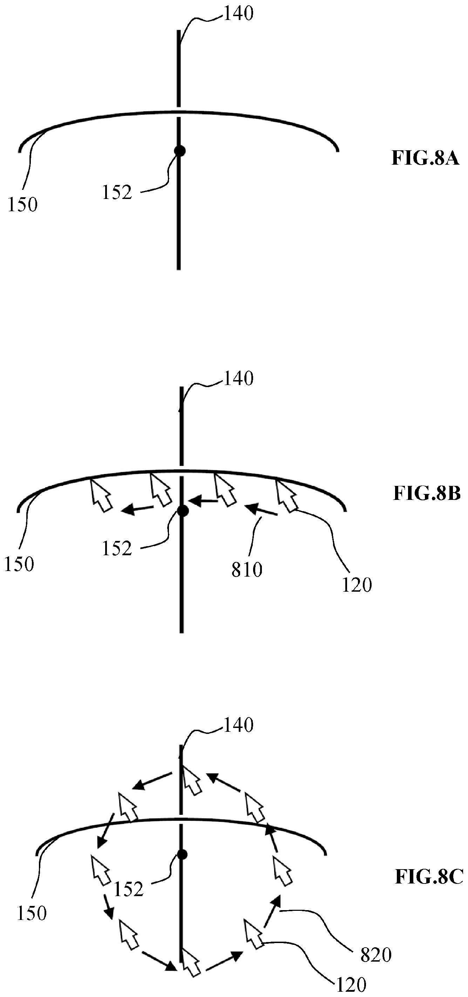

FIG. 8A to FIG. 8C are diagrams showing examples in which the manipulator 150 obtains a movement of the mouse pointer 120.

FIG. 8A shows another one example of the manipulator. The rotational axis is inclined such that an upper side in the drawing is located deeper than a lower side in the drawing as viewed from the virtual camera.

In the first operation method, as shown in FIG. 8B, the operator moves the pointer in a direction of arrows 810 along the ring of the manipulator. To rotate the object clockwise as viewed from above, the pointer is moved from right to left as shown in the drawing. To rotate the object counterclockwise, the pointer is moved from left to right in the opposite manner to the drawing. The relation between the direction for moving the pointer and the rotational direction of the object is equal to in FIG. 7B.

In the second operation method, as shown in FIG. 8C, the operator moves the pointer in a direction of arrows 820 in such a manner as to make a rotational motion approximately about the prescribed point 152. To rotate the object clockwise as viewed from above, the pointer is moved in a counterclockwise rotation as shown in the drawing. To rotate the object counterclockwise, the pointer is moved in a clockwise rotation in the opposite manner to the drawing. The relation between the direction for moving the pointer and the rotational direction of the object is opposite to FIG. 7C.

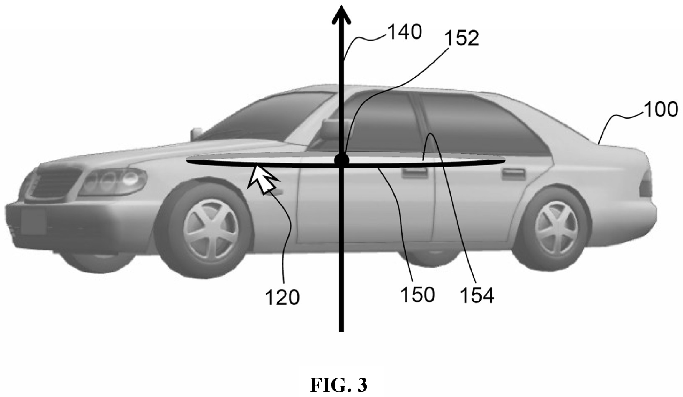

FIG. 3 is a diagram showing an image of the object 100 which is captured by the virtual camera in the case where the axis 140 and a line-of-sight direction of the virtual camera are nearly at a right angle. In this case, the manipulator 150 takes a contour of a thin and long ellipse, and the distance between the prescribed point 152 and the manipulator 150 on the display screen becomes closer.

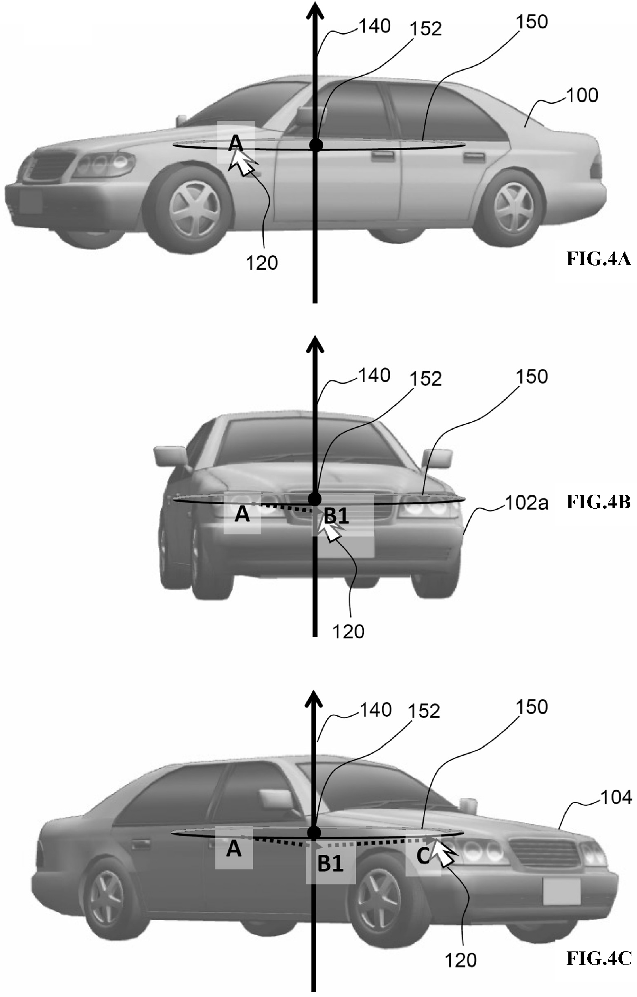

FIG. 4A to FIG. 4C are an example of the operation by the first operation method in the case where the axis 140 and the line-of-sight direction of the virtual camera are nearly at a right angle. It is assumed that the intention of the operator is to rotate the object 100 counterclockwise as viewed from above.

The operator moves the pointer along the ring of the manipulator. First, as shown in FIG. 4A, the operator starts drag from a state where the pointer 120 is located at a point A.

In FIG. 4B, the operator continues the drag operation along the ring of the manipulator 150 to move the pointer 120 to a point B1. The point B1 is located downward of the prescribed point 152. A vector directed from the prescribed point 152 toward the position of the pointer rotates counterclockwise. By this operation, the object 100 is rotated counterclockwise as viewed from above to take an orientation 102a in which the front part of the automobile is visible.

In FIG. 4C, the operator further continues the drag operation along the ring of the manipulator to move the pointer 120 to a point C. The vector directed from the prescribed point 152 toward the position of the pointer rotates counterclockwise. By this operation, the object 100 is further rotated counterclockwise as viewed from above to take an orientation 104 in which the front part and the right side surface of the automobile are visible.

In this way, in the operation of FIG. 4A to FIG. 4C, the object 100 is rotated in the direction intended by the operator.

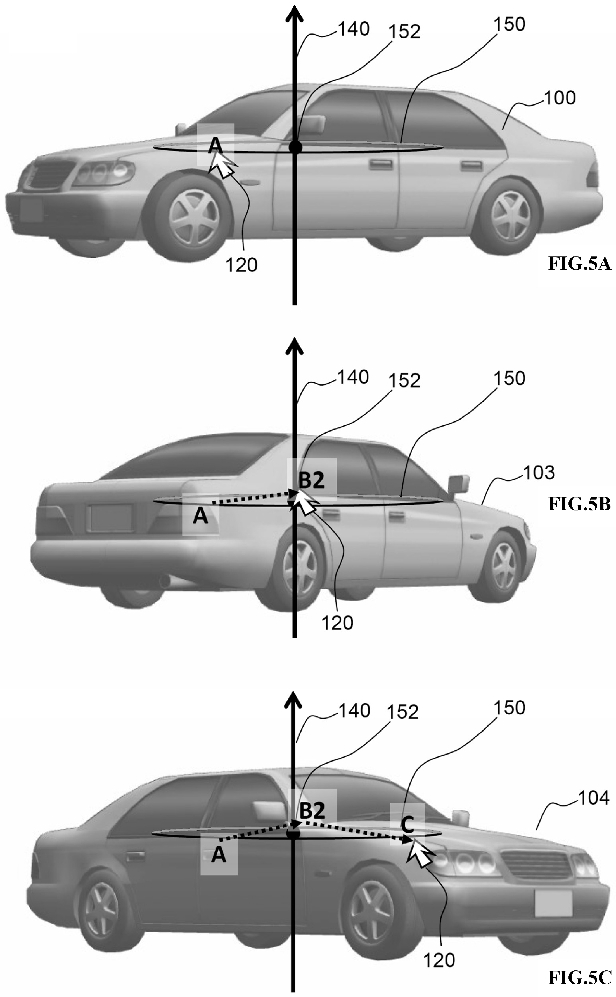

FIG. 5A to FIG. 5C are another example of the operation by the first operation method in the case where the axis 140 and the line-of-sight direction of the virtual camera are nearly at a right angle. Similarly to FIG. 4A to FIG. 4C, it is assumed that the intention of the operator is to rotate the object 100 counterclockwise as viewed from above.

FIG. 5A shows the same state as FIG. 4A. The operator starts drag from a state where the pointer 120 is located at the point A.

In FIG. 5B, the operator continues the drag operation along the ring of the manipulator 150; however, it is assumed that the pointer 120 is slightly displaced from the ring and moved to a point B2. The point B2 is located upward of the prescribed point 152. The vector directed from the prescribed point 152 toward the position of the pointer rotates clockwise. By this operation, the object 100 is rotated clockwise as viewed from above to take an orientation 103 in which the rear part and the right side surface of the automobile are visible.

In FIG. 5C, the operator further continues the drag operation along the ring of the manipulator to move the pointer 120 to the point C. The vector directed from the prescribed point 152 toward the position of the pointer rotates clockwise. By this operation, the object 100 is further rotated clockwise as viewed from above to take the orientation 104 in which the front part and the right side surface of the automobile are visible.

In this way, in the operation of FIG. 5A to FIG. 5C, the object 100 is rotated in a direction opposite to the direction intended by the operator.

As described above, in the case where the axis 140 and the line-of-sight direction of the virtual camera are nearly at a right angle, since the ring of the manipulator 150 and the prescribed point 152 come closer, the direction of the vector directed from the prescribed point 152 toward the position of the pointer largely changes due to a slight displacement of the drag operation along the ring of the manipulator 150, and the rotation of the object 100 becomes a rotation opposite to the intention of the operator in some cases.

In addition, when the pointer is moved near the prescribed point 152, even if the amount of drag is very small, the object 100 is largely rotated, resulting in an unnatural operation feeling.

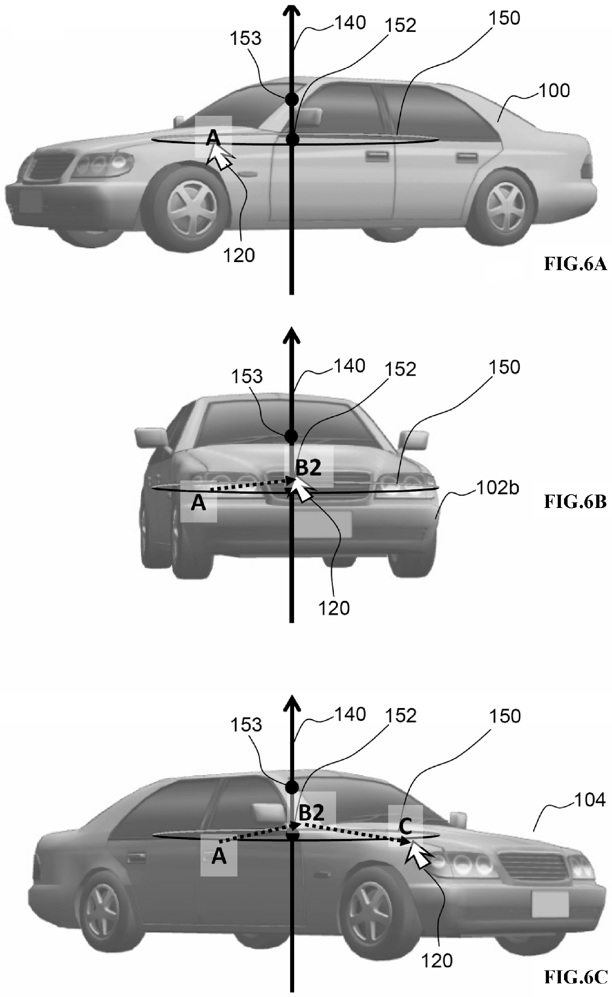

FIG. 6A to FIG. 6C are diagrams showing an example in which the rotational direction of the object 100 is matched with the intention of the operator by changing the position of the prescribed point and obtaining an instruction from the operator by using the changed prescribed point, even in the case where the axis 140 and the line-of-sight direction of the virtual camera are nearly at a right angle.

A trace of the drag operation of the operator in FIG. 6A to FIG. 6C is A, B2, and C, and is the same as those in FIG. 5A to FIG. 5C.

In FIG. 6A, by the operation of the operator, drag is started at the point A.

FIG. 6B is a diagram showing a state where the pointer 120 has been moved to the point B2 by the drag operation. The direction and angle of the rotation of the object 100 can be determined based on the point A, the prescribed point 153, and the point B2. The vector directed from the prescribed point 153 toward the position of the pointer rotates counterclockwise. In FIG. 6B, the object 100 is rotated counterclockwise as viewed from above to take an orientation 102b in which the front part of the automobile is visible. This rotation is a rotation in the direction intended by the operator.

FIG. 6C shows a state where the pointer 120 has been located at the point C by the drag operation of the operator. The direction and angle of the rotation of the object from FIG. 6B to FIG. 6C can be determined based on the point B2, the prescribed point 153, and the point C. Similarly to FIG. 6B, the object 100 is rotated counterclockwise as viewed from above, and the rotation is a rotation matching the intention of the operator.

In FIG. 6A to FIG. 6C, in this way, the rotational direction does not become opposite to the intention of the operator unlike the rotation of the object 100 in FIG. 5A to FIG. 5C.

In this way, the rotation of the object 100 in accordance with the intention of the operator can be achieved by changing the position of the prescribed point from the point 152 to the point 153 even in the case where the axis 140 and the line-of-sight direction of the virtual camera are nearly at a right angle.

In the case of performing the drag operation along the manipulator, the operator often drags a part of the ring which is on the near side (referred to as a "near-side ring part") among parts of the ring of the manipulator, as at the point A in FIG. 4 to FIG. 6. In addition, in a case such as FIG. 7 and FIG. 8, since only half on the near side of the ring is displayed, the operator cannot recognize the half on the deeper side of the ring, and the operator drags the near-side ring part. For this reason, it is desirable that the direction of moving the position of the prescribed point 152 to the position of the prescribed point 153 on the display screen be a direction away from the near-side ring part. This direction, in other words, is a direction from the near side toward the deeper side on the ring of the manipulator, and further in other words, is a direction, on the axis, from a side where a depth value viewed from the virtual camera is large toward a side where the depth value viewed from the virtual camera is small.

Note that it is not desirable to largely separate the position of the prescribed point 153 away from the position of the prescribed point 152. In the case where the second operation method shown in FIG. 7C and FIG. 8C is used, for example, if the prescribed point 153 is located outside the circular trace of the pointer, the rotation of the object 100 becomes a reciprocating rotation against the intention of the operator. For this reason, it is desirable to set the position of the prescribed point 153 such that the prescribed point 153 is located inside the assumed trace of the pointer. The distance between the prescribed point 153 and the prescribed point 152 may be set to be, for example, 0.1 times the radius of the manipulator.

Note that the prescribed point 153 may be set by moving the position of the prescribed point 152 to the position of the prescribed point 153, or the prescribed point 153 may be set in addition to the prescribed point 152. In addition, the distance from the prescribed point 152 to the prescribed point 153 may be changed by using a predetermined function based on the axis 140 about which the object is rotated and the line-of-sight direction of the virtual camera 160.

In addition, the prescribed point 153 does not have to be present on the axis 140, but may be rendered on the display screen. In addition, the prescribed point 153 on the display screen does not necessarily have to be present on a line on which the axis 140 about which the object is rotated is projected onto the display screen.

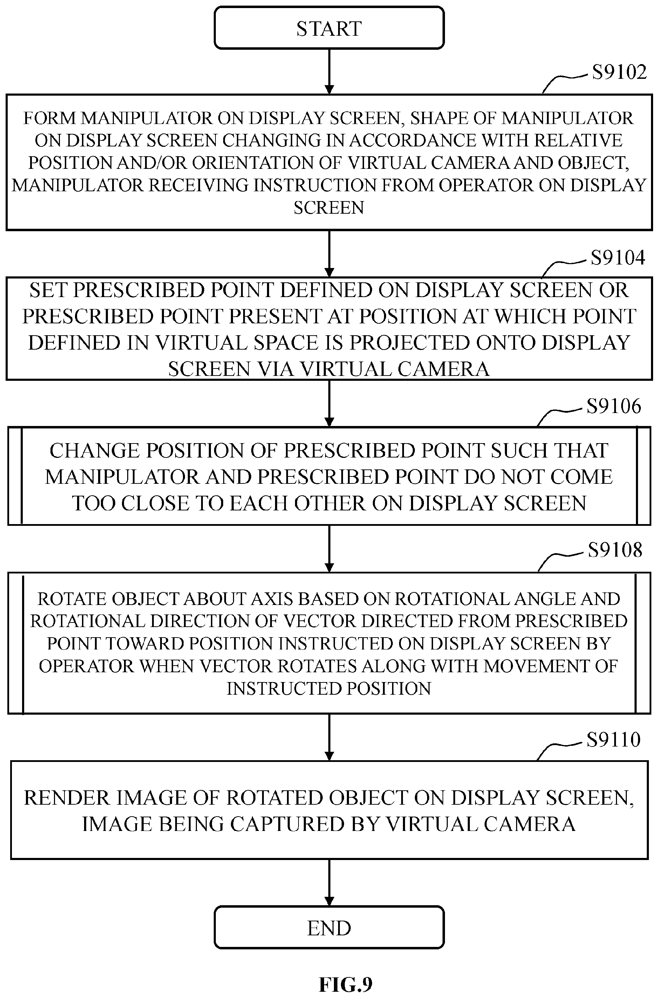

FIG. 9 shows a flowchart of processing of the embodiment. Hereinafter, processing of each step of the processing flow will be described.

Step S9102: Form a manipulator on a display screen, a shape of the manipulator on the display screen changing in accordance with a relative position and/or orientation of a virtual camera and an object, the manipulator receiving an instruction from an operator onto the display screen.

Step S9104: Set a prescribed point defined on the display screen or a prescribed point present at a position at which a point defined in the virtual space is projected onto the display screen via the virtual camera.

Step S9106: Change a position of the prescribed point such that the manipulator and the prescribed point do not come too close to each other on the display screen.

Step S9108: Rotate the object about the axis based on a rotational angle and a rotational direction of a vector directed from the prescribed point toward a position instructed on the display screen by the operator when the vector rotates along with a movement of the instructed position.

Step S9110: Render an image of the rotated object on the display screen, the image being captured by the virtual camera.

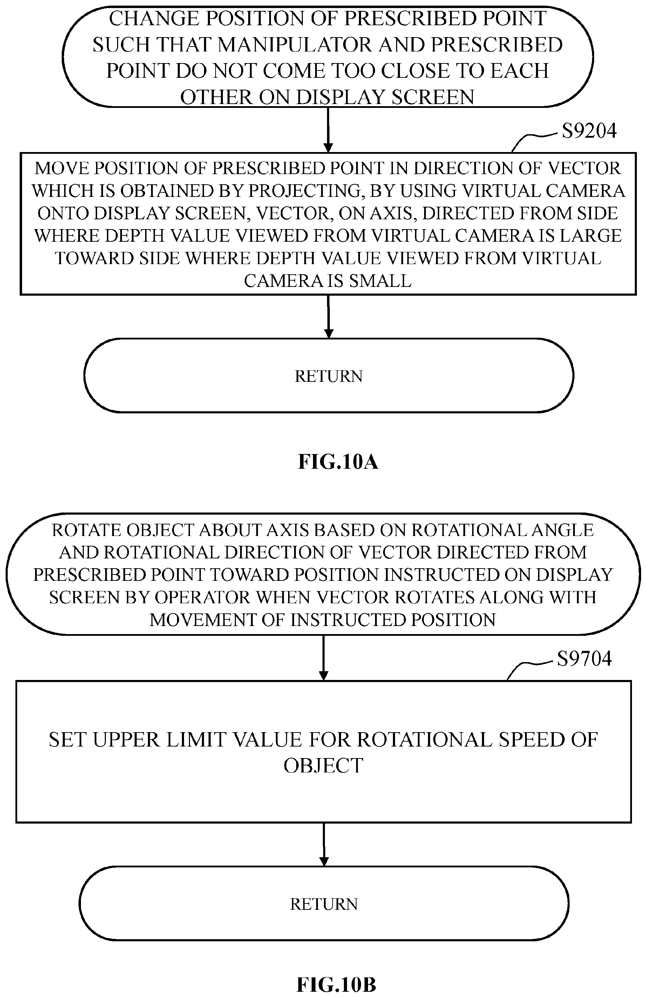

FIG. 10A is a flowchart showing a specific example of the processing (step S9106) of changing the position of the prescribed point such that the manipulator and the prescribed point do not come too close to each other on the display screen.

Step S9204: Move the position of the prescribed point in a direction of a vector which is obtained by projecting, by using the virtual camera onto the display screen, a vector, on the axis, directed from a side where a depth value viewed from the virtual camera is large toward a side where a depth value viewed from the virtual camera is small.

FIG. 10B is a flowchart showing a specific example of the processing (step S9108) of rotating the object about the axis based on a rotational angle and a rotational direction of a vector directed from the prescribed point toward a position instructed on the display screen by the operator when the vector rotates along with a movement of the instructed position.

Step S9704: Set an upper limit value for a rotational speed of the object.

Even when the prescribed point 153 is set so as not to come too close to the manipulator 150, if the position of the pointer is close to the prescribed point 153, there is a case where the rotational speed of the object becomes too fast, so that it becomes difficult to operate the orientation of the object 100. For this reason, the upper limit value may be set in advance for the rotational speed of the object 100. This makes it easy for the operator to operate the orientation of the object.

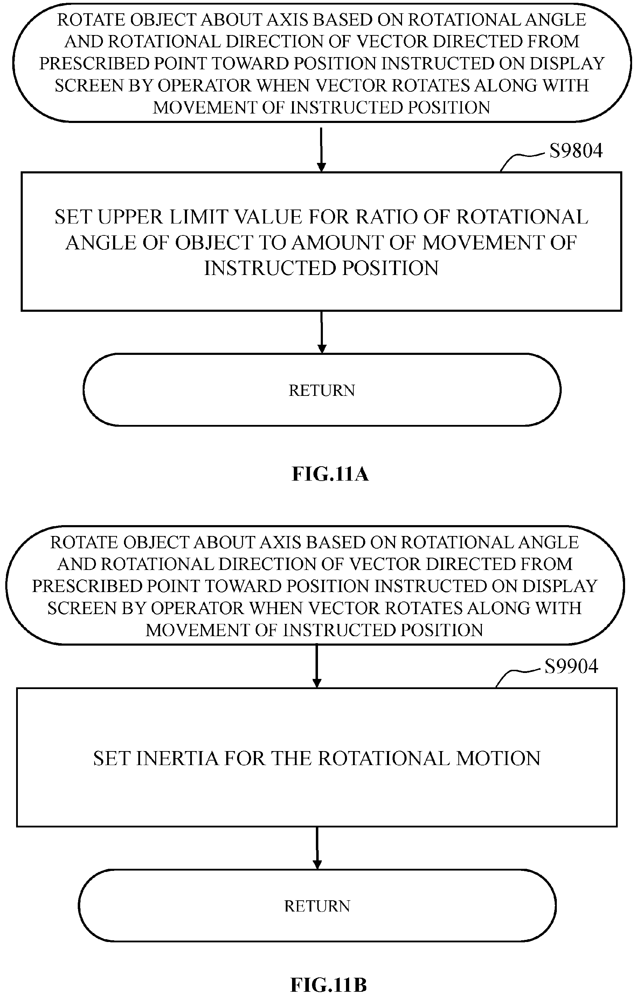

FIG. 11A is a flowchart showing a specific example of the processing (step S9108) of rotating the object about the axis based on a rotational angle and a rotational direction of a vector directed from the prescribed point toward a position instructed on the display screen by the operator when the vector rotates along with a movement of the instructed position.

Step S9804: Set an upper limit value for a ratio of the rotational angle of the object to an amount of movement of the instructed position.

Even when the prescribed point 153 is set so as not to come too close to the manipulator 150, if the position of the pointer is close to the prescribed point 153, there is a case where the amount of rotation of the object 100 becomes too large relative to the amount of movement of the pointer, so that it becomes difficult to adjust the orientation of the object 100. For this reason, the upper limit value may be set in advance for the ratio between the rotational angle of the object 100 and the amount of movement of the pointer. This makes it easy for the operator to adjust the orientation of the object 100.

FIG. 11B is a flowchart showing a specific example of the processing (step S9108) of rotating the object about the axis based on a rotational angle and a rotational direction of a vector directed from the prescribed point toward a position instructed on the display screen by the operator when the vector rotates along with a movement of the instructed position.

Step S9904: Set inertia for the rotational motion.

A specific example of the inertia is as follows. For example, it can be considered to rotate the object 100 such that the rotational speed gradually increases when the object 100 starts to rotate. Alternatively, it can be considered to rotate the object 100 such that the rotational speed gradually decreases before the object 100 stops. Alternatively, it can be considered to stop the object 100 at an angle at which to stop the object 100, by rotating the object 100 over the angle at which to stop the object 100 while the rotational speed is gradually reduced, and then rotating the object 100 in reverse, before the object 100 stops (bounce effect).

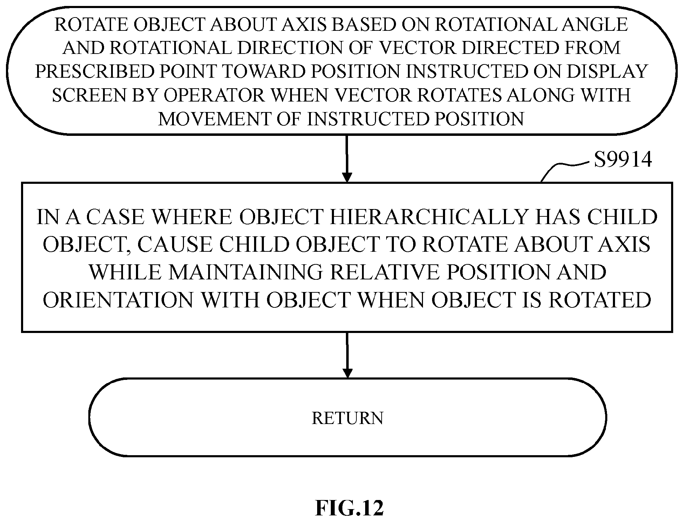

FIG. 12 is a flowchart showing a specific example of the processing (step S9108) of rotating the object about the axis based on a rotational angle and a rotational direction of a vector directed from the prescribed point toward a position instructed on the display screen by the operator when the vector rotates along with a movement of the instructed position.

Step S9914: In a case where the object hierarchically has a child object, cause the child object to rotate about the axis while maintaining a relative position and orientation with the object when the object is rotated.

### <Modifications>

Hereinafter, Modifications are described. Each of the Modifications can be combined with the embodiments as long as there is no contradiction.

The manipulator 150 may contain a part of an ellipse which is obtained by projecting a circle onto the display screen by using the virtual camera, the circle being formed on a plane orthogonal to the axis and having a center at an intersection point of the plane and the axis.

The manipulator 150 may be a figure which is not present in the virtual space but is present on the display screen.

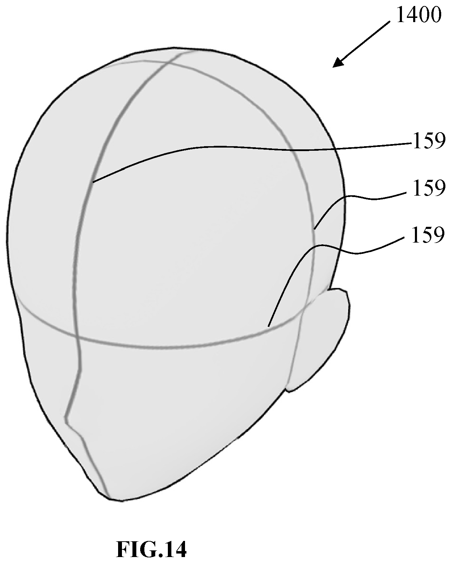

FIG. 14 is a diagram showing another example of the manipulator. As shown in FIG. 14, the manipulator 150 may be lines 159 extending along a surface of an object 1400.

The angle by which to rotate the object about the axis may be equal to the rotational angle of the vector directed from the prescribed point toward the position of the pointer.

The angle by which to rotate the object about the axis may be a rotational angle of a vector which is obtained on the plane 154 in the virtual space by projecting the vector directed from the prescribed point toward the position of the pointer onto the plane 154 from the virtual camera.

The axis may be an axis selected by the operator from a plurality of axes, where the plurality of axes may be orthogonal to one another.

When the manipulator is selected by the operator, an axis corresponding to the selected manipulator among a plurality of axes may be selected.

The prescribed point may be present on a straight line which is obtained by projecting the axis onto the display screen by using the virtual camera.

The prescribed point may be invisible.

The point defined in the virtual space may be present on the axis.

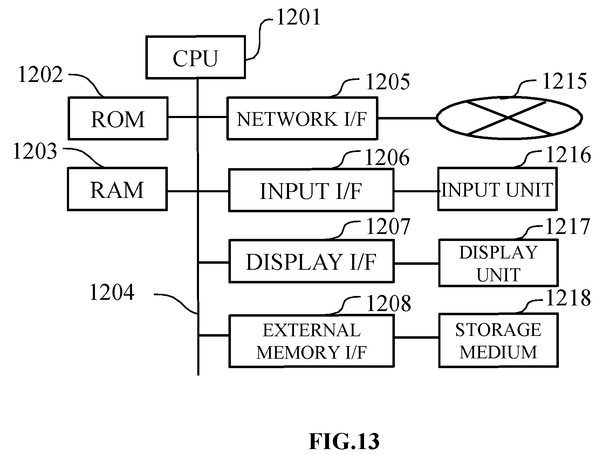

FIG. 13 is a hardware configuration diagram of the embodiment.

The hardware configuration of the embodiment includes a CPU 1201, a ROM 1202 which can store a program and data of the present embodiment, a RAM 1203, a network interface 1205, an input interface 1206, a display interface 1207, and an external memory interface 1208. These pieces of hardware are connected to one another by a bus 1204.

The network interface 1205 is connected to a network 1215. The network 1215 includes a wired LAN, a wireless LAN, the Internet, a telephone network, and the like. An input unit 1216 is connected to the input interface 1206. A display unit 1217 is connected to the display interface 1207. The display unit 1217 may be implemented by a plurality of display devices. A storage medium 1218 is connected to the external memory interface 1208. The storage medium 1218 may be a RAM, ROM, CD-ROM, a DVD-ROM, a hard disk, a memory card, a USB memory, or the like.

The order of procedures of the method or the program of the exemplified embodiment may be switched as long as there is no contradiction. In addition, as long as there is no contradiction, one of the exemplified procedures can be executed multiple times at different timings. In addition, as long as there is no contradiction, a plurality of procedures can be executed simultaneously. In addition, not all the procedures are essential, and as long as there is no contradiction, some of the procedures do not have to be present or executed.

The above-described points also apply to the elements of the methods specified in claims. That is, as long as there is no contradiction, the order of the elements can be switched. In addition, as long as there is no contradiction, a plurality of elements can be executed simultaneously. Then, the execution of these elements belongs to the technical scope specified in claims.

In addition, each procedure may be executed by an operating system or hardware. In addition, the program can be distributed in a state of being stored in a non-transitory medium.

The program and method for achieving the above-described embodiments may be executed by a computer having the hardware configuration shown in FIG. 13. That is, the program of the embodiments may be implemented as a method for causing a computer to execute the program.

The program may be stored in the storage medium 1218, the ROM 1202, or the RAM 1203.

Each embodiment can be implemented as a hardware device in which the program is installed.

### [Reference Signs List]

- 100: object
- 102a: orientation
- 102b: orientation
- 120: pointer
- 140: axis
- 150: manipulator
- 152: prescribed point
- 153: prescribed point
- 154: plane
- 160: virtual camera

## Claims

1. A rendering method for causing a computer to render, on a display screen, an image of an object placed in a virtual space, the image being captured by a virtual camera placed in the virtual space, comprising:
forming a manipulator on the display screen, a shape of the manipulator on the display screen changing in accordance with a relative position and/or orientation of the virtual camera and the object, the manipulator receiving an instruction onto the display screen from an operator to rotate the object about an axis with reference to a contour of the manipulator displayed on the display screen;
setting a prescribed point defined on the display screen or a prescribed point present at a position at which a point defined in the virtual space is projected onto the display screen via the virtual camera;
changing, in a case where on the display screen, among parts of the contour, a part of the contour which is displayed on the display screen to be present near the virtual camera has come close to the prescribed point, a position of the prescribed point in a direction away from the part of the contour of the manipulator;
rotating the object about the axis based on a rotational angle and a rotational direction of a vector directed from the prescribed point toward a position instructed on the display screen by the operator when the vector rotates along with a movement of the instructed position; and
rendering an image of the rotated object on the display screen, the image being captured by the virtual camera.

2. The rendering method according to claim 1, wherein
the changing of the position of the prescribed point includes moving the position of the prescribed point in a direction of a vector which is obtained by projecting, by using the virtual camera onto the display screen, a vector, on the axis, directed from a side where a depth value viewed from the virtual camera is large toward a side where a depth value viewed from the virtual camera is small.

3. The rendering method according to claim 1, wherein
the manipulator contains a part of an ellipse which is obtained by projecting a circle onto the display screen by using the virtual camera, the circle being formed on a plane orthogonal to the axis and having a center at a point shared by the plane and the axis.

4. The rendering method according to claim 1, wherein
the rotational angle is equal to an angle by which the object is rotated about the axis.

5. The rendering method according to claim 1, wherein
the axis is an axis selected by the operator from a plurality of axes, and the plurality of axes are orthogonal to one another.

6. The rendering method according to claim 5, wherein
when the manipulator is selected by the operator, an axis corresponding to the selected manipulator is selected among the plurality of axes.

7. The rendering method according to claim 1, wherein
the rotating includes setting an upper limit value for a rotational speed of the object.

8. The rendering method according to claim 1, wherein
the rotating includes setting an upper limit value for a ratio of the rotational angle of the object to an amount of movement of the instructed position.

9. The rendering method according to claim 1, wherein
the rotating includes setting inertia for the rotational motion.

10. The rendering method according to claim 1, wherein
in a case where the object hierarchically has a child object, the rotating includes causing the child object to rotate about the axis while maintaining a relative position and orientation with the object when the object is rotated.

11. The rendering method according to claim 1, wherein
the prescribed point is present on a straight line which is obtained by projecting the axis onto the display screen by using the virtual camera.

12. The rendering method according to claim 1, wherein
the prescribed point is invisible.

13. The rendering method according to claim 1, wherein
the point defined in the virtual space is present on the axis.

14. A program for causing a computer to execute the rendering method according to any one of claims 1 to 13.
